# EUROPÄISCHE PATENTSCHRIFT

(11) **EP 0 624 022 B1**
(45) Veröffentlichungstag und Bekanntmachung des Hinweises auf die Patenterteilung: **05.11.2003**
(21) Anmeldenummer: 93107277.1
(22) Anmeldetag: 05.05.1993
(51) Int. Cl.: H04M 3/24, H04Q 11/06, H04Q 11/08

(54) **Anordnung zur Sprechwegeprüfung in einem Koppelnetz einer digitalen Zeitmultiplex-Fernsprechvermittlungsstelle**
Apparatus for testing the speech path in the switching network of a digital time-multiplex telephone exchange
Dispositif pour tester le chemin de parole dans le réseau de commutation d'un central téléphonique numérique à multiplexage temporel

(43) Veröffentlichungstag der Anmeldung: 09.11.1994
(73) Patentinhaber: SIEMENS AKTIENGESELLSCHAFT, 80333 München (DE)
(72) Erfinder: Lindwurm, Franz, Dipl.-Ing., W-8000 München 40 (DE); Troost, Marcel Abraham, Dipl.-Ing., W-8000 München 71 (DE)

(56) Entgegenhaltungen:
- EP-A- 0 027 226
- EP-A- 0 265 837
- DE-A- 2 631 033
- PROCEEDINGS, INTERNATIONAL SWITCHING SYMPOSIUM, 7-11 MAY 1979, PAGES 193-200, PARIS FR J.P. LAGER ET AL 'Fault Detection and Processing in the MT Time Division System'

## Beschreibung

Die Erfindung bezieht sich auf eine Anordnung zur Sprechwegeprüfung in einem Zeitkoppelstufen oder kombinierte Zeit-Raum-Koppelstufeneinheiten und Raumkoppelstufeneinheiten enthaltenden Koppelnetz einer digitalen Zeitmultiplex-Fernsprechvermittlungsstelle, mit einer Prüfeinrichtung, die Prüfwörter an die jeweiligen Koppelstufen bzw. Koppelstufeneinheiten des genannten Koppelnetzes abzugeben gestattet und die über die betreffenden Koppelstufen bzw. Koppelstufeneinheiten geleitete Prüfwörter aufzunehmen und auszuwerten gestattet.

Koppelnetze digitaler Zeitmultiplex-Vermittlungsstellen enthalten Einrichtungen zur Durchschaltung von Sprechwegeverbindungen in Form von Zeitkoppelstufeneinheiten oder kombinierten Zeit-Raum-Koppelstufeneinheiten und Raumkoppelstufeneinheiten sowie Einrichtungen zur Steuerung der betreffenden Koppelstufeneinheiten und damit zur jeweiligen Durchschaltung.

Der ordnungsgemäße Betrieb der zuvor erwähnten Einrichtungen kann in der Weise überprüft werden, dass Daten zur Steuerung einer Durchschaltung der betreffenden Koppelstufeneinheiten nach einem Eintrag in entsprechende Steuerspeicher wieder ausgelesen und mit dem jeweils erwarteten Wert verglichen werden.

Aufwendiger hingegen ist die Prüfung der Durchschaltung von Sprechwegeverbindungen. Bisher wurden im Rahmen der Fertigungsprüfung und durch Prüfungen nach einer Baugruppenreparatur ein externer Testmustergenerator verwendet, der lediglich eine Gut-Schlecht-Aussage erlaubt. Zum Zwecke der Sprechwegeprüfung im laufenden Vermittlungsbetrieb wurden bisher Prüfmustergeneratoren und Prüfmusterempfänger verwendet, die Bestandteil der jeweiligen Leitungsanschlußgruppe der Vermittlungsstelle sind.

In Zeiten hoher Verkehrslast dauert eine derart durchgeführte Prüfung im laufenden Vermittlungsbetrieb oftmals mehrere Stunden, da die Anschlußgruppen zu einem überwiegenden Teil mit vermittlungstechnischer Steuerung befaßt sind.

Es ist nun auch schon eine Schaltungsanordnung für PCM-Zeitmultiplexvermittlungen in Zeit-Raum-Raum-Zeitstruktur mit PCM-Grundleitungen individuell zugeordneten Durchschalteeinheiten bekannt (DE-A-26 31 033), die in einer zentralen Speichereinheit vereinigt je Übertragungsrichtung einen beim Einschreiben von Fernmeldeinformationen zyklisch und beim Auslesen derselben wahlfrei angesteuerten und sowohl zur PCM-Grundleitung als auch zum räumlichen Teil des Koppelfeldes hin auslesbaren Vollspeicher zur Informationsspeicherung aufweist. Ferner weist die betreffende Schaltungsanordnung den Vollspeichern gemeinsam zugeordnete Haltespeicher auf, von denen der eine die für das Auslesen der Vollspeicher zur PCM-Grundleitung hin und der andere die für deren Auslesen zum räumlichen Teil des Koppelfeldes hin benötigten Ansteueradressen speichert. Überdies weist die betreffende Schaltungsanordnung einen Haltespeicher auf, der die für die Ansteuerung der Koppelpunkte, welche zu den Vollspeichern unmittelbar Zugang haben, benötigten Ansteueradressen speichert.

Um diese bekannte Schaltungsanordnung so zu erweitern, dass eine Prüfung ihrer wesentlichen Bestandteile möglich ist, ist bei der betreffenden bekannten Schaltungsanordnung vorgesehen, dass jeweils Gruppen von Durchschalteeinheiten individuell zugeordnete Prüfeinheiten vorgesehen sind, die mit den einzelnen Durchschalteeinheiten sowohl über den räumlichen Teil des Koppelfeldes wie die Durchschalteeinheiten untereinander als auch über den von der Durchschalteeinheit abgehenden Teil der betreffenden PCM-Grundleitung verbindbar sind. Diese Prüfeinheiten weisen zumindest eine Einrichtung zum Erkennen des Pulsrahmenkennungswortes sowie Einrichtungen zum Aussenden von Prüfwörtern auf den räumlichen Teil des Koppelfeldes und zum Auswerten solcher vom räumlichen Teil des Koppelfeldes oder vom abgehenden Teil der betreffenden PCM-Grundleitung her empfangenen Prüfwörter auf. Der damit insgesamt verbundene schaltungstechnische Aufwand wird jedoch zuweilen als unerwünscht hoch angesehen.

Der Erfindung liegt demgemäß die Aufgabe zugrunde, eine Anordnung der eingangs genannten Art zur Sprechwegeprüfung so weiterzubilden, dass unter Verzicht auf externe bzw. als Bestandteil von Anschlußgruppen vorgesehene gesonderte Testmustergeneratoren und in Anpassung an unterschiedliche Prüfbedingungen sowohl hardware- als auch steuerungsmäßig mit vergleichbar geringem Aufwand ausgekommen werden kann.

Gelöst wird die vorstehend aufgezeigte Aufgabe bei einer Anordnung der eingangs genannten Art erfindungsgemäß dadurch, dass die Prüfeinrichtung einen Testmustergenerator, der durch eine der alternativ zum Vermittlungsbetrieb in einem Prüfbetrieb nutzbaren Zeit-Koppelstufen bzw. Zeit-Raum-Koppelstufeneinheiten des genannten Koppelnetzes in Verbindung mit einem Testsenderegister gebildet ist, und einen Testmusterempfänger enthält, der durch eine der alternativ zum Vermittlungsbetrieb in einem Prüfbetrieb nutzbaren Zeitkoppelstufeneinheiten oder Zeit-Raum-Koppelstufeneinheiten des betreffenden Koppelnetzes in Verbindung mit einem Testempfangsregister gebildet ist, dass die Prüfeinrichtung eine gesonderte Zeit- bzw. Zeit-Raum- oder Raumkoppelstufeneinheit, die in einer zugehörigen Koppelgruppensteuerung enthalten ist und als weiterer Testmustergenerator ausgebildet ist, sowie eine gesonderte Zeit- bzw. Zeit-Raum-Koppelstufeneinheit aufweist, die ebenfalls in der genannten zugehörigen Koppelgruppensteuerung enthalten ist und als weiterer Testmusterempfänger ausgebildet ist, und dass die Anordnung wenigstens eine dem Koppelnetz zugeordnete Testmustereinspeisestelle und wenigstens eine dem Koppelnetz zugeordnete Testmusterauskoppelstelle und einen Testbus aufweist, über den die Testmustereinspeisestelle bzw. -auskoppelstelle von der Koppelgruppensteuerung erreichbar sind.

Die vorstehend aufgezeigte Lösung der der Erfindung zugrunde liegenden Aufgabe bringt den Vorteil mit sich, dass insgesamt mit einem relativ geringen Aufwand ausgekommen werden kann, um eine Sprechwegeprüfung in einem Koppelnetz einer digitalen Zeitmultiplex-Fernsprechvermittlungsstelle durchzuführen.

Bei der erfindungsgemäßen Anordnung erfolgt zum einen eine Integration von Testmustergeneratoren und Testmusterempfängern in das Koppelnetz, indem wenigstens eine der Zeitkoppelstufeneinheiten oder kombinierten Zeit-Raumkoppelstufen und Raumkoppelstufeneinheiten dieses Koppelnetzes so ausgestaltet ist, dass sie alternativ zu ihrer eigentlichen Funktion als Koppeleinheit wahlweise als Testmustergenerator oder im Falle der Zeitkoppelstufen sogar als Testmustergenerator und Testmusterempfänger wirken kann.

Ergänzt werden die vorstehend betrachteten integrierten Testmustergeneratoren und Testmusterempfänger durch in gleicher Weise ausgestattete Zeitkoppelstufeneinheiten und Raumkoppelstufeneinheiten, die jedoch zusätzlich zu dem Koppelnetz vorgesehen, zentral angeordnet und nicht Bestandteil des Koppelnetzes sind und die ausschließlich als Testmustergeneratoren und/oder Testmusterempfänger arbeiten.

Zusammen mit einer Mehrzahl von Testmustereinspeisestellen und Testmusterauskoppelstellen, die so angeordnet sind, dass zumindest die einzelnen Baugruppen des Koppelnetzes, wenn nicht sogar einzelne Teile der betreffenden Baugruppen separat überprüft werden können, ergibt sich somit ein äußerst flexibles Prüfkonzept, welches eindeutige Aussagen gestattet und ohne großen Aufwand Fehlerlokalisierungen ermöglicht.

Zweckmäßige Ausgestaltungen der Erfindung sind in den Unteransprüchen erfaßt.

Nachstehend wird die Erfindung anhand eines Ausführungsbeispiels unter Bezugnahme auf die Zeichnungen näher erläutert.

In den Zeichnungen zeigen
- Fig. 1: ein Übersichts-Blockschaltbild einer Anordnung gemäß der Erfindung,
- Fig. 2: eine Zeit-Raum-Koppeleinheit einer solchen Anordnung.

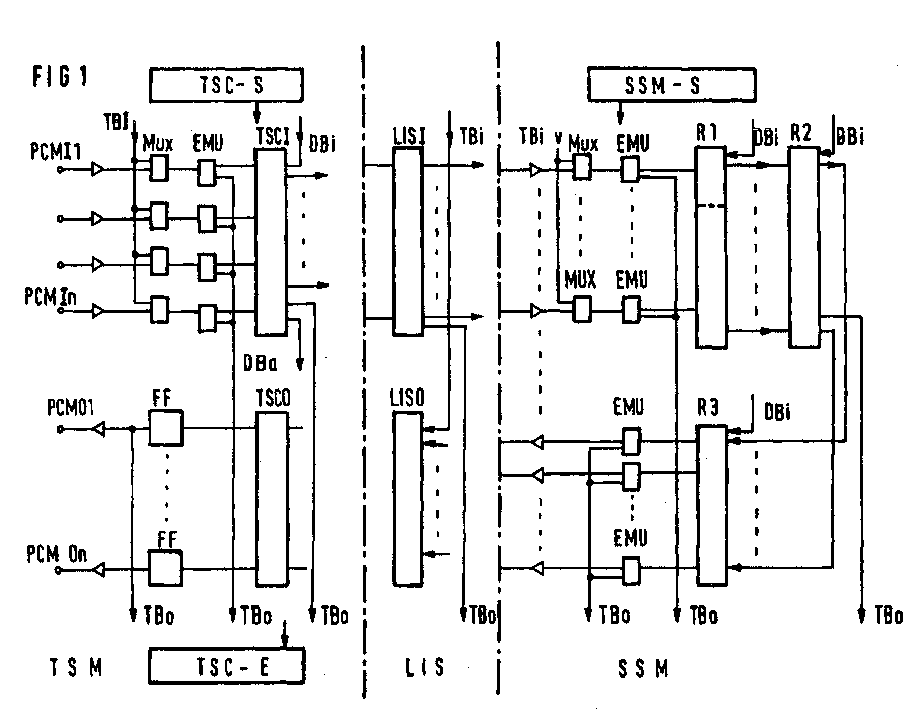

In Fig. 1 ist ausschnittsweise und in für das Verständnis der Erfindung erforderlichem Umfang ein Koppelnetz einer digitalen Zeitmultiplex-Fernsprechvermittlungsstelle als gefaltete Anordnung dargestellt, die fünfstufig aufgebaut ist. Fig. 1 zeigt von den einzelnen Stufen jeweils nur eine von mehreren Koppeleinheiten sowie die diesen individuell zugeordneten Teile. So ist von der eingangsseitigen Zeitkoppelstufe oder kombinierten Zeit-Raum-Koppelstufe lediglich die Koppeleinheit TSCI dargestellt.

Von der sich an die erwähnte Zeitkoppelstufe anschließenden eingangsseitigen Raumkoppelstufe ist lediglich die Raumkoppeleinheit R1 gezeigt, von der zweiten und mittleren Raumkoppelstufe ist lediglich die Raumkoppeleinheit R2 dargestellt und von der dritten und ausgangsseitigen Raumkoppelstufe die Raumkoppeleinheit R3 gezeigt. Von der ausgangsseitigen Koppelstufe zeigt Fig. 1 lediglich die Koppeleinheit TSC0.

In der Praxis bilden, wie auch in Fig. 1 angedeutet, die eingangsseitige und ausgangsseitige Zeitkoppelstufe eine Baueinheit TSM. Die eingangsseitige und die ausgangsseitige Raumkoppelstufen sind ebenfalls zu einer Baueinheit vereinigt, die mit SSM8 bezeichnet ist. Die mittlere Raumkoppelstufe bildet eine eigene Baueinheit SSM16.

Darüber hinaus ist eine Schnittstellenbaugruppe LIS vorhanden, die die zwischen der eingangsseitigen Zeitkoppelstufe und der eingangsseitigen Raumkoppelstufe liegende Schnittsteileneinheit LISI und die zwischen der ausgangsseitigen Raumkoppelstufe R3 und der ausgangsseitigen Zeitkoppelstufe TSCO liegende Schnittstelleneinheit LISO umfaßt.

Wie in Fig. 1 angedeutet, weisen die Zeitkoppeleinheiten TSCI und TSCO eine Mehrzahl von Eingängen und Ausgängen auf, an die indirekt, d.h. über weitere, in Fig. 1 ebenfalls dargestellte Baueinheiten auf der Leitungsseite Zeitmultiplexleitungen für ankommende Übertragungsrichtungen PCMI1 bis PCMIN bzw. Zeitmultiplexleitungen für abgehende Übertragungsrichtung PCMOI bis PCM0n und zur Koppelfeldseite hin Zwischenleitungen für ankommende bzw. für abgehende Übertragungsrichtungen angeschlossen sind. Mit einer solchen Zeitkoppeleinheit kann sowohl eine Zeitkanalumsetzung von Zeitlagen, die auf den eingangsseitig angeschlossenen Zeitmultiplexleitungen bzw. Zwischenleitungen gebildet sind, auf Zeitlagen vorgenommen werden, die auf abgehenden Zwischenleitungen bzw. Übertragungsleitungen gebildet sind, als auch eine räumliche Vermittlung zwischen eingangsseitig und ausgangsseitig angeschlossenen Leitungen vorgenommen werden. Es handelt sich hier also nicht um eine Zeitstufeneinheit im strengen Sinne, sondern um eine kombinierte Zeit-Raumstufeneinheit, wobei jedoch auch die Vorgänge der räumlichen Vermittlung auf Zeitlagenumsetzungen zurückgeführt sind.

Erfindungsgemäß sind die Zeitkoppeleinheiten TSCI und TSCO so ausgestattet, dass sie alternativ zu ihrer eigentlichen Durchschaltefunktion wahlweise als Testmustergenerator oder als Testmusterempfänger wirken können.

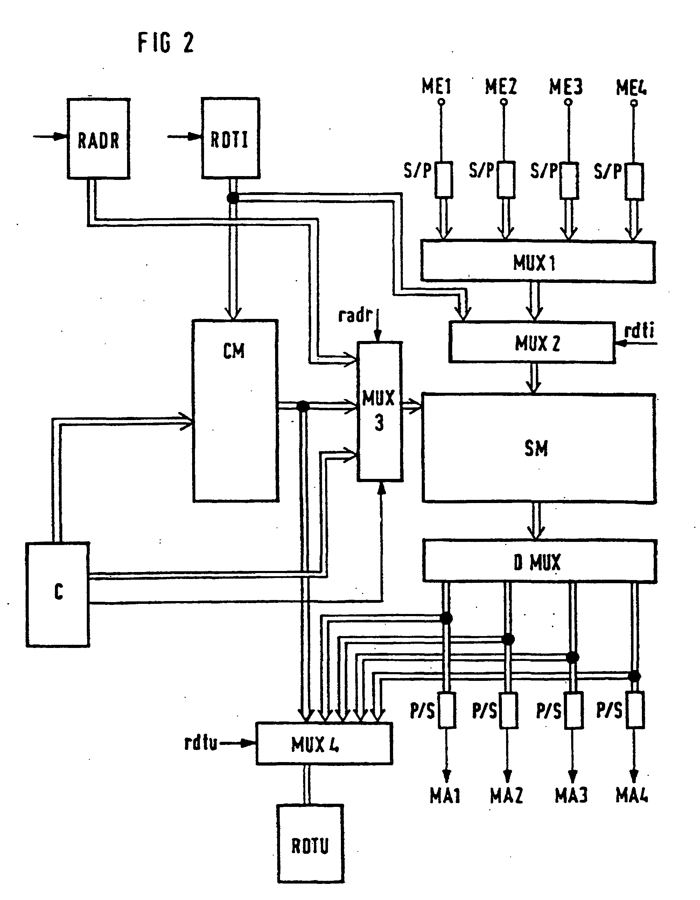

Wie eine solche Ausgestaltung aussehen kann bzw. ein Testmustergenertor- oder -empfängerbetrieb sich abspielt, wird anhand der Fig. 2 erläutert, in der eine Zeitkoppeleinheit TSCI bzw. TSCO mehr ins einzelne gehend dargestellt ist. Die Fig. 2 zeigt ein für den Anschluß von vier Zeitmultiplexleitungen für ankommende Übertragungsrichtung und vier Zeitmultiplexleitungen für abgehende Übertragungsrichtung ausgelegte Koppeleinheit. Kernbestandteil dieser Koppeleinheit ist ein Informationsspeicher SM, an dessen vier Eingängen ME1 bis ME4 die vier Zeitmultiplexleitungen für ankommende Übertragungsrichtung über Serien-Parallel-Wandler S/P und über Multiplexer Mux1 und Mux2 angeschlossen sind. Ausgangsseitig werden über einen Demultiplexer DMUX und über Parallel-Serien-Wandler P/S Ausgänge MA1 bis MA4 erreicht, an die die Zeitmultiplexleitung für abgehende Übertragungsrichtung angeschlossen sind.

Jedem der auf der Zeitmultiplexleitung in ankommender Übertragungsrichtung gebildeten Zeitkanäle ist im Informationsspeicher SM individuell eine Speicherzelle für jeweils ein PCM-Wort zugeordnet.

Das Einschreiben in diesen Informationsspeicher von den Zeitmultiplexleitungen für ankommende Übertragungsrichtung aus erfolgt zyklisch in der Weise, dass nacheinander die Informationsinhalte der ersten Zeitkanäle auf den Zeitmultiplexleitungen eingeschrieben werden, dann in entsprechender Weise der Eintrag der zweiten Zeitkanäle erfolgt, usw.. Die Ansteueradressen für einen derartigen zyklischen Eintrag werden von einem Zähler C über einen Multiplexer MUX3 geliefert.

Die Ansteueradressen für das wahlfreie Auslesen des Informationsspeichers SM liefert im Normalfall, d.h. also im Vermittlungsbetrieb, ein Haltespeicher CM ebenfalls über den Multiplexer MUX3. Er wird seinerseits durch Auslesesteueradressen beaufschlagt, die ebenfalls der Zähler C liefert. Im Vermittlungsbetrieb der Zeitkoppeleinheit erfolgt das zyklische Einschreiben in den Informationsspeicher SM und das wahlfreie Auslesen aus diesem jeweils abwechselnd, d. h. die vom Zähler C gelieferten Einchreibsteueradresen und die vom Haltespeicher CM bereitgestellten Auslesesteueradresen müssen ebenfalls abwechselnd auftreten. Dies wird dadurch erreicht, dass der Zähler C mit seinem niederwertigsten Bit den Multiplexer MUX3 derart beeinflußt, dass abwechselnd die vom Zähler C gelieferten Ansteueradressen (als Einschreibansteueradressen) und die vom Haltespeicher CM gelieferten Ansteueradressen (als Auslesesteueradressen) an den Informationsspeicher SM gelangen.

Im Falle der alternativen Ausnutzung der Zeitkoppeleinheit als Prüfmusterempfänger wird der Informationsspeicher SM im Zuge einer aufgebauten Prüfverbindung wie im Vermittlungsbetrieb im Einschreibzyklus mit einem Prüfmuster beschrieben.

Diese Prüfmuster werden ebenfalls wie im Vermittlungsbetrieb wahlfrei ausgelesen, im Gegensatz zum Vermittlungsbetrieb stammen die hier wirksamen Ansteueradressen jedoch nicht aus dem Haltespeicher CM, sondern aus einem Prüfsteuerregister RADR. Die im Prüfsteuerregister RADR befindlichen Ansteueradressen gelangen dabei über den Multiplexer MUX3 an den Informationsspeicher SM, wobei ein diesen Multiplexer beeinflussendes Steuersignal radr sicherstellt, dass in dieser Betriebsphase weder vom Haltespeicher CM noch vom Zähler C gelieferte Ansteueradressen den Multiplexer passieren können.

Das Auslesen aus dem Informationsspeicher SM erfolgt vorzugsweise nach Unterbindung weiterer Einschreibvorgänge.

Im Gegensatz zum normalen Vermittlungsbetrieb werden die ausgelesenen Informationen nicht über die Ausgänge MA1 bis MA4 auf Zeitmultiplexleitungen für abgehende Übertragungsrichtung abgegeben, sondern über einen Multiplexer MUX4, der in dieser Phase von einem Steuersignal rdtu beaufschlagt wird, an ein Prüfempfangsregister RDTU. Von diesem Register aus werden die Prüfmuster einem Vergleich mit dem ursprünglich ausgesendeten Prüfmuster zugeführt.

In der anderen alternativen Betriebsart, in der die Zeitkoppeleinheit als Prüfmustergenerator ausgenutzt ist, wird das im normalen Vermittlungsbetrieb ablaufende zyklische Einschreiben von den Zeitmultiplexleitungen für ankommende Übertragungsrichtung aus unterbunden, wozu der Multiplexer MUX2 mit einem Steuersignal rdti beaufschlagt wird. Stattdessen werden Prüfmuster eingeschrieben, die in einem Prüfsenderegister RDTI stehen. Dies geschieht wahlfrei unter der Ansteuerung durch eine in dem schon erwähnten Prüfsteuerregister RADR befindliche Ansteueradresse anstelle der zyklischen Ansteuerung durch den Zähler C.

Das Auslesen dieser Prüfmuster im Zuge des Prüfmustersendebetriebs erfolgt wie im Vermittlungsbetrieb, also über die Ausgänge MA1 bis MA4 auf einer der Zeitmultiplexleitungen für abgehende Übertragungsrichtung.

Die Zufuhr der Anteueradressen an das erwähnte Prüfsteuerregister RADR sowie der Prüfmuster an das erwähnte Senderegister RDTI von einer zentralen Koppelfeldsteuerbaugruppe aus sowie die Weitergabe von Testmustern aus dem Testempfangsregister RDTU im Testempfangsbetrieb an diese Koppelfeldsteuerbaugruppe zum Zwecke des erwähnten Vergleichs erfolgt über einen Datenbus, der in Fig. 1 mit DBi und DBa angedeutet ist. Über diesen Datenbus werden auch die Einstellinformationen des normalen Vermittlungsbetriebs von der erwähnten Steuerbaugruppe an die Koppeleinheiten TSCI und TSCO übertragen.

Bei dem in Fig. 1 auszugsweise dargestellten Koppelnetz sind erfindungsgemäß auch die Raumkoppeleinheiten R1, R2 und R3 so ausgestattet, dass sie alternativ zu ihrer eigentlichen Koppelfunktion als Testmustergenerator wirken können. Die hierzu erforderlichen Einstellinformationen werden ähnlich wie beim Zeitstufenelement über einen Datenbus DBi von der nicht dargestellten Koppelsteuerbaugruppe aus geliefert, über den auch die Einstellinformationen für den Vermittlungsbetrieb von der Koppelnetzsteuerbaugruppe an den Steuerspeicher dieser Raumkoppeleinheit gelangen.

Den Raumkoppeleinheiten ist ferner ein hier nicht dargestelltes Testeingaberegister zur Speicherung einer der Anzahl der Koppelstufeneingänge gleichen Anzahl von Testmusterbits in eingangsindividuellen Registerplätzen zugeordnet. Anstelle der dem Vermittlungsbetrieb dienenden Durchschalteadressen sind in den Haltespeicher der Raum-Koppeleinheiten Ansteueradressen einschreibbar, die zu einer derartigen Durchschaltung von Testmusterbits führen, dass Gruppen von aufeinanderfolgende Bits desselben Binärwerts abgebenden Ausgängen der Raumkoppelstufeneinheiten festgelegt sind. Eine solche Gruppe kann auch sämtliche Ausgänge umfassen. Ferner kann gezielt ein Binärwertwechsel an diesen Ausgängen nach einer bestimmten Anzahl von Zeitlagen herbeigeführt sein.

Zur erfindungsgemäßen Prüfanordnung gehören neben diesen vorerwähnten integrierten Testmustergeneratoren und Testmusterempfängern in Form von Zeitkoppeleinheiten und Raumkoppeleinheiten des Koppelnetzes an zentraler Stelle, und zwar als Bestandteil der schon erwähnten Koppelgruppensteuerung angeordnete Testmustergeneratoren und Testmusterempfänger. Bei diesen handelt es sich erfindungsgemäß um in der geschilderten Weise ausgestattete Koppeleinheiten, die jedoch in diesem Fall ausschließlich dem Testbetrieb dienen. In Fig. 1 ist mit TSC-S eine als Testmustergenerator wirkende zentral angeordnete Zeitkoppeleinheit, mit TSC-E eine als Testmusterempfänger wirkende zentral angeordnete Zeitkoppeleinheit und mit SSM-S eine als Testmustersender arbeitende zentral angeordnete Raumkoppelstufe angedeutet. In der Praxis kann es sich bei dem Testmustergenerator TSC-S und bei dem Testmusterempfänger TSC-E um ein und dieselbe Zeitkoppelstufe handeln.

Wie Fig. 1 ferner zeigt, weist das erfindungsgemäß ausgestattete Koppelfeld eine Reihe von Testmustereinspeisepunkten auf, die über einen Testbus TBi von der erwähnten nicht dargestellten Koppelgruppensteuerung bzw. von den dort angeordneten Testmustergeneratoren aus erreicht werden können. So können beispielsweise in die vor der Zeitkoppelstufe TSCI angeordneten Multiplexer Mux, in die vor der Raumkoppelstufe R1 angeordneten Multiplexer, sowie in die Bestandteil der Schnittstellenbaugruppe LIS darstellende Schnittstelleneinheit LISO Prüfmuster eingespeist werden.

Die Fig. 1 zeigt ferner eine Reihe von Testmusterauskoppelstellen, von denen aus über einen Testbus TBo Prüfmuster an die Koppelgruppensteuerung bzw. an die erwähnten, dort befindlichen zentralen Prüfmusterempfänger gelangen können. Solche Auskoppelstellen befinden sich hinter Taktanpassungseinheiten EMU, die den Eingängen der Zeitkoppeleinheit TSCI zugeordnet sind, ausgangsseitig der Zeitkoppeleinheiten TSCI und TSCO, ausgangsseitig von Kippstufen FF, die den Ausgängen der Zeitkoppeleinheit TSCO nachgeschaltet sind, ausgangsseitig der Einheiten LISI und LISO der Schnittstellenbaugruppe LIS, ausgangsseitig von Taktanpassungseinheiten EMU, die den Eingängen der Raumkoppeleinheiten R1, R2 und R3 zugehörig sind sowie ausgangsseitig der den Ausgängen der Raumkoppeleinheit R3 zugeordneten Kippstufen FF.

Bei den beschriebenen Testmustereinspeisestellen und Testmusterauskoppelstellen handelt es sich lediglich um Beispiele; es können weitere solcher Stellen sowie eine andere Verteilung derselben vorgesehen sein.

Aufgrund der gegebenen Möglichkeit, in vielfältigen Kombinationen Testmuster entweder an zentraler Stelle zu erzeugen und an verschiedenen Stellen des Koppelfeldes einzuspeisen oder innerhalb des Koppelfeldes mit Hilfe der integrierten Testmustergeneratoren die Testmustererzeugung vorzunehmen, sowie der Möglichkeit, einen der internen oder den externen Testmusterempfänger zu nutzen, und dabei die Auskopplung über eine von mehreren in Frage kommenden Auskoppelstellen vorzunehmen, ist ein äußerst flexibles Prüfkonzept geschaffen, das eine Vielfalt von Prüfvarianten zuläßt, die zu eindeutigen Prüfergebnissen führen und eine schnelle Fehlerlokalisierung gewährleisten.

So werden z.B., wenn die den Eingängen der Zeitkopppelbaueinheit TSCI vorgeschalteten Taktanpassungsschaltungen EMU einer Prüfung unterzogen werden sollen, die zentral angeordnete Koppeleinheit TSC-S als Testmustergenerator und die an zentraler Stelle angeordnete Zeitkoppelstufe TSC-E als Testmusterempfänger eingesetzt.

Es wäre allerdings auch möglich, in diesem Falle die Bestandteil des Koppelfeldes darstellende Koppeleinheit TSCI als Testmusterempfänger auszunutzen. Die Entscheidung darüber, von welcher der beiden Möglichkeiten Gebrauch gemacht wird, hängt u.a. auch von der jeweiligen Programmlaufzeit der beiden Prüfvarianten und davon ab, ob davon ausgegangen werden kann, dass die Koppeleinheit TSCI einwandfrei arbeitet. Letzteres könnte nach einer Gut-Prüfung der Taktanpassungsschaltungen EMU gemäß der erstbeschriebenen Prüfvariante durch Einbeziehung der Koppeleinheit TSCI in eine Prüfung festgestellt werden, in welchem Falle das von zentraler Stelle aus eingespeiste Testmuster nach Durchlaufen der Koppeleinheit TSCI an den zentralen Testmusterempfänger TSC-E gegeben wird.

Der Einsatz einer zentral angeordneten Raumkoppeleinheit als Testmustergenerator kommt insbesondere dann in Frage, wenn Bestandteile der Raumkoppelstufe zu prüfen sind, beispielsweise die den Eingängen der Raumkoppeleinheit R1 zugeordnete Taktanpassungsschaltungen EMU oder die Raumkoppeleinheit R1 selbst.

Ein typischer Fall des Einsatzes einer Raumkoppeleinheit als integrierter Testmustergenerator wäre die Prüfung der Raumkoppeleinheit R2 der mittleren Raumkoppelstufe, in welchem Falle die Raumkoppeleinheit R1 als Testmustergenerator wirken könnte.

## Patentansprüche

1. Anordnung zur Sprechwegeprüfung zur Verwendung in einem Zeitkoppelstufeneinheiten oder kombinierte Zeit-Raum-Koppelstufeneinheiten und Raumkoppelstufeneinheiten enthaltenden Koppelnetz einer digitalen Zeitmultiplex-Fernsprechvermittlungsstelle, mit einer Prüfeinrichtung, die Testmuster an die jeweiligen Koppelstufeneinheiten des genannten Koppelnetzes abzugeben gestattet und die über die betreffenden Koppelstufeneinheiten geleiteten Testmuster aufzunehmen und auszuwerten gestattet,
**dadurch gekennzeichnet,**
**dass** die Prüfeinrichtung einen Testmustergenerator, der durch eine der alternativ zum Vermittlungsbetrieb in einem Prüfbetrieb nutzbaren Zeit-Koppelstufen bzw. Zeit-Raum-Koppelstufeneinheiten (TSCI, TSCO, R1, R2, R3) des genannten Koppelnetzes in Verbindung mit einem Testsenderegister (RDTI) gebildet ist, und einen Testmusterempfänger enthält, der durch eine der alternativ zum Vermittlungsbetrieb in einem Prüfbetrieb nutzbaren Zeitkoppelstufeneinheiten oder Zeit-Raum-Koppelstufeneinheiten (TSCI, TSCO) des betreffenden Koppelnetzes in Verbindung mit einem Prüfempfangsregister (RDTU) gebildet ist,
**dass** die Prüfeinrichtung eine gesonderte Zeit- bzw. Zeit-Raum- oder Raumkoppelstufeneinheit (TSC-S, SSM-S), die in einer zugehörigen Koppelgruppensteuerung enthalten ist und die als weiterer Testmustergenerator ausgebildet ist, sowie eine gesonderte Zeit- bzw. Zeit-Raum-Koppelstufeneinheit (TSC-E) aufweist, die ebenfalls in der genannten zugehörigen Koppelgruppensteuerung enthalten ist und die als weiterer Testmusterempfänger ausgebildet ist,
und **dass** die Anordnung wenigstens eine dem Koppelnetz zugeordnete Testmustereinspeisestelle und wenigstens eine dem Koppelnetz zugeordnete Testmusterauskoppelstelle und einen Testbus (TBi, TBo) aufweist, über den die Testmustereinspeisestelle bzw. -auskoppelstelle von der Koppelgruppensteuerung erreichbar sind.

2. Anordnung nach Anspruch 1, **dadurch gekennzeichnet, dass** den Zeitkoppelstufen bzw. den kombinierten Zeit-Raum-Koppelstufeneinheiten neben dem Testsenderegister (RADR) zur Lieferung eines gewünschten Testmusters ein Teststeuerregister (RDTI) zur Lieferung jeweils einer Einchreibsteueradresse für einen Informationsspeicher (SM) der betreffenden Koppelstufeneinheit zugeordnet ist,
dass das im Testsenderegister (RADR) enthaltene Testmuster in den betreffenden Informationsspeicher (SM) anstelle von auf Multiplexleitungen (ME1 bis ME4) für ankommende Übertragungsrichtung angelieferten Fernsprechinformationen unter wahlfreier Ansteuerung durch die im Teststeuerregister (RDTI) enthaltenen Einschreibsteueradressen anstelle einer zyklischen Ansteuerung durch einen Zähler einschreibbar und danach wie im Vermittlungsbetrieb wahlfrei unter Ansteuerung durch einen Haltespeicher (CM) auslesbar ist
und dass der Informationsspeicher (SM) in einer als Testmusterempfänger dienenden Koppelstufeneinheit derart betreibbar ist, dass in ihm wie im Vermittlungsbetrieb unter zyklischer Ansteuerung ein Testmuster einschreibbar ist und dass sein Speicherinhalt bei Unterbindung weiterer Einschreibvorgänge und unter Ansteuerung durch eine im zugehörigen Prüfsteuerregister (RDTI) befindliche Ansteueradresse anstelle einer vom Haltespeicher (CM) gelieferten Ansteueradresse wahlfrei, jedoch in ein Prüfempfangsregister (RDTU) anstelle auf eine Multiplexleitung für abgehende Übertragungsrichtung (MA1 bis MA4) auslesbar ist, von dem aus ein Vergleich mit dem eingeschriebenen Testmuster durchführbar ist.

3. Anordnung nach Anspruch 2, **dadurch gekennzeichnet, dass** der als Testmustergenerator ausgenutzten jeweiligen Raumkoppelstufeneinheit ein Testeingaberegister zur Speicherung einer der Anzahl der Koppelstufeneingänge gleichen Anzahl von Testmusterbits an eingangsindividuellen Registerplätzen zugeordnet ist
und dass der in der betreffenden Raumkoppelstufeneinheit vorhandene Haltespeicher als Ansteueradressenspeicher dient, in welchem anstelle der dem Vermittlungsbetrieb dienenden Durchschalteadressen Ansteueradressen einschreibbar sind, die zu einer solchen Durchschaltung von Testmusterbits führen, dass jeweils Gruppen von aufeinanderfolgende Bits desselben Binärwerts abgebenden Ausgängen der betreffenden Raumkoppelstufeneinheit festgelegt sind.

## Claims

1. An arrangement for voice path testing for use in a switching network of a digital time division multiplex telephone switching centre, containing time switching stage units or combined time/space switching stage units and space switching stage units, with a test facility which enables test patterns to be supplied to the respective switching stage units of the aforementioned switching network and enables the test patterns routed by way of the switching stage units in question to be received and evaluated,
**characterised in that**
the test facility contains a test pattern generator which is formed by means of one of the time switching stages or time/space switching stage units (TSCI, TSCO, R1, R2, R3) of the aforementioned switching matrix that can be used as an alternative to call processing mode in a test operational mode in conjunction with a test sender register (RDTI), and contains a test pattern receiver which is formed by means of one of the time switching stage units or time/space switching stage units (TSCI, TSCO) of the switching matrix in question that can be used as an alternative to call processing mode in a test operational mode in conjunction with a test receive register (RDTU),
that the test facility comprises a separate time, time/space or space switching stage unit (TSC-S, SSM-S) which is contained in an associated switching group controller and takes the form of a further test pattern generator, and also comprises a separate time or time/space switching stage unit (TSC-E) which is likewise contained in the aforementioned associated switching group controller and takes the form of a further test pattern receiver,
and that the arrangement comprises at least one test pattern input point assigned to the switching network and at least one test pattern output point assigned to the switching network and a test bus (TBi, TBo) by way of which the test pattern input and output points are accessible from the switching group controller.

2. The arrangement according to Claim 1, **characterised in that** in addition to the test sender register (RADR) for supplying a desired test pattern a test control register (RDTI) for supplying a write control address in each case for an information memory (SM) of the switching stage unit in question is assigned to the time switching stages or the combined time/space switching stage units,
that the test pattern contained in the test sender register (RADR) can be written into the relevant information memory (SM) instead of telephone information delivered on multiplex lines (ME1 to ME4) for the incoming transmission direction under random control by the write control addresses contained in the test control register (RDTI) instead of a cyclical control by a counter and can then be read out as in call processing mode randomly under the control of a control memory (CM),
and that the information memory (SM) can be operated in a switching stage unit serving as a test pattern receiver in such a way that a test pattern can be written in it as in call processing mode under cyclical control and that its memory contents can be read out at random whilst further write operations are suppressed and under the control of an access address located in the associated test control register (RDTI) instead of an access address supplied by the control memory (CM), but to a test receive register (RDTU) instead of to a multiplex line for the outgoing transmission direction (MA1 to MA4), from where a comparison can be performed with the written test pattern.

3. The arrangement according to Claim 2, **characterised in that** a test input register for the storage of a number of test pattern bits equal to the number of switching stage inputs in input-specific register locations is assigned to the respective space switching unit utilized as a test pattern generator,
and that the control memory present in the space switching stage unit in question serves as an access address memory into which can be written, instead of the through-connection addresses used for call processing, access addresses which result in a through-connection of test pattern bits such that groups of outputs of the space switching stage units supplying successive bits having the same binary value are defined in each case.

## Revendications

1. Dispositif pour tester le circuit de parole dans un réseau de connexion, contenant des unités à étages de connexion temps ou des unités à étages de connexion combinés temps-espace et des unités à étages de connexion espace, d'un central téléphonique numérique à multiplexage temporel, avec un dispositif de test qui permet de fournir des modèles de test aux unités à étages de connexion respectives dudit réseau de connexion et qui permet de recevoir et d'évaluer des modèles de test conduits par l'intermédiaire des unités à étages de connexion concernées,
**caractérisé par le fait que**
le dispositif de test contient un générateur de modèles de test, qui est formé par l'une des unités de connexion temps ou temps-espace (TSCI, TSCO, R1, R2, R3), utilisables dans un mode de fonctionnement de test en variante du mode de fonctionnement de commutation, dudit réseau de connexion en relation avec un registre d'émission de test (ROTI), et un récepteur de modèles de test, qui est formé par l'une des unités de connexion temps ou temps-espace (TSCI, TSCO), utilisables dans un mode de fonctionnement de test en variante du mode de fonctionnement de commutation, dudit réseau de connexion en relation avec un registre de réception de test (RDTU),
le dispositif de test comporte une unité à étages de connexion temps ou temps-espace ou espace particulière (TSC-S, SSM-S), qui est contenue dans une commande de groupe de connexion associée et qui est conçue comme un autre générateur de modèles de test, ainsi qu'une unité à étages de connexion temps ou temps-espace particulière (TSC-E), qui est également contenue dans la commande de groupe de connexion associée mentionnée et qui est conçue comme un autre récepteur de modèles de test
et le dispositif comporte au moins un point d'introduction de modèles de test associé au réseau de connexion et au moins un point de récupération de modèles de test associé au réseau de connexion ainsi qu'un bus de test (TBi, TBo) par l'intermédiaire duquel le ou les points d'introduction et de récupération de modèles de test sont joignables par la commande de groupe de connexion.

2. Dispositif selon la revendication 1, **caractérisé par le fait que**
il est associé aux unités à étages de connexion temps ou aux unités à étages de connexion temps-espace combinés, outre le registre d'émission de test (RADR) destiné à fournir un modèle de test souhaité, un registre de commande de test (RDTI) destiné à fournir à chaque fois une adresse de commande d'écriture pour une mémoire d'informations (SM) de l'unité à étages de connexion considérée,
le modèle de test contenu dans le registre d'émission de test (RADR) peut être écrit dans la mémoire d'informations (SM) considérée à la place d'informations téléphoniques délivrées sur des lignes à multiplexage (ME1 à ME4) pour la direction de transmission entrante en utilisant une commande libre au moyen des adresses de commande d'écriture contenues dans le registre de commande de test (RDTI) à la place d'une commande cyclique au moyen d'un compteur et peut être lu ensuite librement comme lors du fonctionnement en commutation en utilisant une commande au moyen d'une mémoire de maintien (CM)
et la mémoire d'informations (SM) dans une unité à étages de connexion servant de récepteur de modèles de test peut être exploitée de telle sorte qu'un modèle de test peut y être écrit comme lors du fonctionnement en commutation au moyen d'une commande cyclique et que son contenu de mémoire peut être lu librement en bloquant d'autres opérations d'écriture et en utilisant une commande au moyen d'une adresse de commande se trouvant dans le registre de commande de test (RDTI) associé à la place d'une adresse de commande fournie par la mémoire de maintien (CM) mais vers un registre de réception de test (RDTU) à la place d'une ligne à multiplexage pour la direction de transmission sortante (MA1 à MA4), registre à partir duquel une comparaison avec le modèle de test écrit peut être effectuée.

3. Dispositif selon la revendication 2, **caractérisé par le fait que**
il est associé à l'unité à étages de connexion espace respective exploitée comme générateur de modèles de test un registre d'entrée de test destiné à mémoriser un nombre, égal au nombre des entrées d'étages de connexion, de bits de modèles de test à des emplacements de registre propres aux entrées
et la mémoire de maintien existant dans l'unité à étages de connexion espace considérée sert de mémoire d'adresse de commande dans laquelle peuvent être écrites à la place des adresses d'interconnexion servant au fonctionnement en commutation des adresses de commande qui conduisent à une telle interconnexion de bits de modèles de test que sont spécifiés à chaque fois des groupes de sorties, délivrant des bits successifs de même valeur binaire, de l'unité à étages de connexion espace considérée.
